# EUROPEAN PATENT APPLICATION

(11) **EP 4 814 880 A1**
(43) Date of publication of application: **30.09.2026**
(21) Application number: 25166015.5
(22) Date of filing: 25.03.2025
(51) Int. Cl.: G06V 10/00

(54) **IDENTIFYING DUPLICATES**

(71) Applicant: Bayer Aktiengesellschaft, 51373 Leverkusen (DE)
(72) Inventor: Matthias, LENGA, Leverkusen, 51373 (DE); Dinh Tuan, TRUONG, Leverkusen, 51373 (DE)
(74) Representative: BIP Patents

(57) **Abstract**

Systems, methods, and computer programs disclosed herein relate to the identification of (near-) duplicate visual data.

## Description

### FIELD OF THE DISCLOSURE

Systems, methods, and computer programs disclosed herein relate to the identification of (near-) duplicate visual data.

### BACKGROUND

Medical visual data such as surgical videos, endoscopic videos, ultrasound videos, radiological images, whole slide images, and other forms of medical visual data are critically important in the healthcare field as they provide detailed visual insights into the human body, enabling accurate diagnosis, treatment planning, and/or monitoring of diseases. These visual data sources capture complex information that can reveal abnormalities, disease progression, and/or treatment responses, making them invaluable for clinicians and researchers alike.

Furthermore, such data can be used to train machine learning models, which can analyse vast amounts of visual information to identify patterns and correlations that may not be easily discernible by human observers. By leveraging advanced algorithms, these models can assist in automating tasks such as image classification, segmentation, and/or anomaly detection, thereby enhancing the efficiency and accuracy of medical assessments. Trained machine learning models are particularly useful for improving diagnostic accuracy, predicting patient outcomes, and/or personalizing treatment plans based on individual patient data. They can also facilitate the development of decision support systems that aid healthcare professionals in making informed clinical decisions. Ultimately, the integration of machine learning with medical visual data holds the potential to revolutionize patient care, streamline workflows, and contribute to better health outcomes through enhanced diagnostic capabilities and more effective treatment strategies.

When training a model and testing the trained model, duplicates and/or near-duplicates of visual data should be avoided. Duplicates are identical copies of the same visual data, while near-duplicates are visual data that is similar but has slight variations, such as different resolution, format, and/or minor alterations.

These duplicates and near-duplicates occur in visual data due to various reasons, including repeated scans, data augmentation for machine learning, and/or intentional modifications by the user. Identifying duplicates and near-duplicates is crucial for several reasons, such as maintaining the quality of the hosted visual data, reducing storage costs and potentially preventing the intended or unintended artificial inflation of the provisioned data volume.

In the context of training and testing machine learning models, near-duplicates can pose challenges, as they may lead to overfitting or biased learning if not handled appropriately.

Duplicates and/or near-duplicates imply various data risks when machine learning approaches are developed on contaminated datasets. Duplicates and/or near-duplicates can pose challenges, as they may lead to overfitting and/or biased learning. Model performance may be negatively impacted by (near-) duplicates. Model evaluations may be biased due to data leakage between train and test sets (e.g., as observed in: B. Barz, J. Denzler: Do We Train on Test Data? Purging CIFAR of Near-Duplicates, Journal of Imaging, Vol. 6, No. 6, p. 41).

Near-duplicates can also be an indication of an adversarial attack. In adversarial attacks, input data is deliberately manipulated to trick machine learning models into making false predictions. This manipulation often involves making small, imperceptible changes to the input data that are designed to exploit vulnerabilities in the model.

So, there is a need to identify duplicates and/or near-duplicates.

### SUMMARY

The present disclosure addresses this and further needs.

In a first aspect, the present disclosure provides a computer-implemented method comprising:
- receiving visual data,
- generating a plurality of patches based on the visual data, wherein each patch represents a portion of the visual data,
- generating a global embedding based on the plurality of patches, wherein the global embedding represents the plurality of patches,
- determining a similarity of the global embedding with one or more reference global embeddings, wherein each reference global embedding represents a plurality of reference patches of reference visual data,
- identifying visual reference data for which the similarity is greater than a predefined threshold.

In another aspect, the present disclosure provides a computer system comprising:
a processing unit; and
a memory storing a computer program configured to perform, when executed by the processing unit, an operation, the operation comprising:
   - receiving visual data,
   - generating a plurality of patches based on the visual data, wherein each patch represents a portion of the visual data,
   - generating a global embedding based on the plurality of patches, wherein the global embedding represents the plurality of patches,
   - determining a similarity of the global embedding with one or more reference global embeddings, wherein each reference global embedding represents a plurality of reference patches of reference visual data,
   - identifying visual reference data for which the similarity is greater than a predefined threshold.

In another aspect, the present disclosure provides a non-transitory computer readable storage medium having stored thereon a computer program that, when executed by a processing unit of a computer system, cause the computer system to execute the following steps:
- receiving visual data,
- generating a plurality of patches based on the visual data, wherein each patch represents a portion of the visual data,
- generating a global embedding based on the plurality of patches, wherein the global embedding represents the plurality of patches,
- determining a similarity of the global embedding with one or more reference global embeddings, wherein each reference global embedding represents a plurality of reference patches of reference visual data,
- identifying visual reference data for which the similarity is greater than a predefined threshold.

### BRIEF DESCRIPTION OF THE DRAWINGS

Fig. 1 shows an example of training a machine learning model.
Fig. 2 shows an example of how a global embedding is generated.
Fig. 3 shows a flowchart of the computer-implemented method of the present disclosure.
Fig. 4 shows a distributed generation and storage of embeddings used for hierarchical similarity search.
Fig. 5 shows a hierarchical similarity search scheme for the recognition of (nearly) identical videos of WSI and surgical procedures.
Fig. 6 illustrates a computer system according to some example implementations of the present disclosure in more detail.

### DETAILED DESCRIPTION

Various example embodiments will be more particularly elucidated below without distinguishing between the aspects of the disclosure (method, computer system, computer-readable storage medium). On the contrary, the following elucidations are intended to apply analogously to all the aspects of the disclosure, irrespective of in which context (method, computer system, computer-readable storage medium) they occur.

If steps are stated in an order in the present description or in the claims, this does not necessarily mean that the disclosure is restricted to the stated order. On the contrary, it is conceivable that the steps can also be executed in a different order or else in parallel to one another, unless, for example one step builds upon another step, this requiring that the building step be executed subsequently (this being, however, clear in the individual case). The stated orders may thus be exemplary embodiments of the present disclosure.

As used herein, the articles "a" and "an" are intended to include one or more items and may be used interchangeably with "one or more" and "at least one". As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The terms used in this disclosure have the meaning that these terms have in the prior art, in particular in the prior art cited in this disclosure, unless otherwise indicated.

The present disclosure provides means for identifying (near-) duplicate visual data.

"Visual data" refers to any form of information that is represented in a visual format, encompassing both static and dynamic media. This includes images, such as photographs, scans, diagrams, and/or illustrations, as well as videos, which consist of a sequence of moving images and sounds. Visual data is characterized by its ability to convey complex information through visual representation, making it easier to analyze, interpret, and communicate insights across various fields, including medicine, science, education, and media.

In an embodiment of the present disclosure, the term "visual data" refers to medical visual data.

"Medical visual data" refers to any form of visual information specifically generated and/or utilized in the healthcare field, e.g. to aid in diagnosis, treatment, and/or research. This encompasses a wide range of modalities, including radiological images and scans (such as X-rays, CT scans, and MRIs), surgical videos that document procedures, ultrasonic images and videos used for real-time visualization of internal structures, whole slide images of tissue samples for histopathological analysis, and other visual representations of medical information.

The term "(near-) duplicate" means "near-duplicate" and/or "duplicate".

The term "duplicate" means an identical copy of the visual data.

A "near-duplicate" refers to a visual data instance that is similar to another instance but not identical. Near-duplicates may have slight variations in content, resolution, orientation, lighting, and/or other attributes that make them distinct, yet they still convey similar information and/or represent the same subject matter. The term near-duplicate has some variability that can be constrained by using predefined similarity thresholds to determine whether or not a visual data instance is a near-duplicate (see below for more details).

In an embodiment of the present disclosure, a "near-duplicate" of visual data is characterized by the similarity between the near duplicate and the visual data being above a threshold. The similarity can be quantified using a similarity measure (see further below in the description).

Examples of (near-) duplicates are and/or relate to
- identical copies of a visual data instance, with no changes whatsoever. Such duplicates occur, for example, when visual data is copied to a different data storage.
- format duplicates, i.e. visual data instances that are identical in content but saved in different file formats (e.g. NIfTI to DICOM conversion).
- resolution duplicates, i.e. visual data instances that are identical in content but have different resolutions and/or dimensions. For videos, the temporal resolution can vary, i.e. different frame rates can occur.
- compression duplicates, i.e. visual data instances that are identical but have been saved with different compression algorithms and/or compression levels, leading to variations in file size and/or quality.
- adversarial duplicates, i.e. duplicates artificially generated to cause damage.
- cropped and/or padded content, visual data instances that are similar but have been cropped and/or padded differently, e.g., showing only a part of the original image or video.
- rotated content, i.e. visual content that has been rotated at different angles.
- translated content, i.e. visual content comprising translated text and/or audio data.
- scaled content, i.e. visual content that has been resized, e.g. upscaled or downscaled.
- colour variations, i.e. visual content subjected to different colour adjustments. For example, staining variations in digital pathology images.
- contrast and/or brightness adjustments, i.e. visual data that has been altered in terms of contrast and/or brightness, e.g. to simulate different imaging conditions and/or intensity windows.
- noise additions, i.e. visual data to which (e.g. random) noise pattern has been added.
- blurring and/or sharpening, i.e. visual data that has been blurred and/or sharpened, e.g. to test a machine learning model's ability to handle different levels of detail.
- watermarks / imprints / machine overlays, i.e. visual data containing a watermark, imprint and/or machine overlay and/or different types thereof.
- intentionally altered content, e.g. visual data comprising intended pixel (or voxel) modifications.
- deformations, i.e. visual data that has undergone a deformation (e.g. affine transformation and/or deformation of vector fields). Such transformation may be carried out for various image and video processing techniques (e.g. image registration).

In the first step, visual data is received. This is usually the visual data for which (near-) duplicates are to be identified.

The term "receiving" is to be interpreted broadly and includes any means capable of providing visual data (or any other information/data) for further processing by the computer system(s) of the present disclosure. The term "receiving" may mean transmitting data from one computer system to another computer system. The term "receiving" may mean transmitting data from an imaging device (such as a magnetic resonance imaging (MRI) scanner, computed tomography (CT) scanner, X-ray unit, ultrasound scanner, ultrasound system, whole slide scanner, surgical video camera, microscope) to the computer system of the present disclosure. The term "receiving" may mean uploading of data into a data memory of the computer system, e.g. by a user. The term "receiving" may mean retrieving data from a data storage; the data storage may be a component of and/or connected to the computer system, for example via a network.

In a further step, a plurality of patches is generated based on the visual data. A patch is or represents a portion of the visual data.

The plurality of patches taken together can represent the entire visual data or a portion of it. The portion can be equal to or less than 100%, 90%, 80%, 70%, 60%, 50%, 40%, 20% or 10% or any other percentage. The percentage can, for example, be set based on the computing power available for the steps described below.

In an embodiment of the present disclosure, a patch is an image. The term "image" as used herein means preferably a data structure that represents a spatial distribution of a physical signal. The spatial distribution may be of any dimension, for example 2D, 3D, 4D or any higher dimension. The spatial distribution may be of any shape, for example forming a grid and thereby defining pixels or voxels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D or 3D RGB/grayscale/depth image, or a 3D surface/volume occupancy model. An image is usually composed of discrete image elements (e.g., pixels for 2D images, voxels for 3D images, doxels for 4D images).

A patch may be a frame from a video. It is possible that a plurality of frames are extracted from the video. The number of frames may be smaller than the number of frames present in the video. For example, it is possible that only a portion of the frames are extracted from the video, e.g. less than 100%, 90%, 80%, 70%, 60%, 50%, 40%, 20% or 10% or any other percentage. It is possible that only every second or third or fourth or generally *n*^{th} frame is extracted, where n is an integer greater than zero. It is also possible that a defined number of frames are randomly extracted from the video. The extracted frames represent moments within the temporal sequence represented by the video. The moments can be at a constant distance from each other or at varying distances. The moments can represent the entire sequence or a part of it.

A patch can be or represent a layer or slice of a three-dimensional (3D) image. The three-dimensional image (3D) can represent an examination region of an examination object. The "examination object" is preferably a living being, more preferably a mammal, most preferably a human. The "examination region" is a part of the examination object, for example an organ or part of an organ or a plurality of organs or another part of the examination object.

In radiology, 3D imaging techniques, such as CT (computed tomography) or MRI (magnetic resonance imaging), generate a volumetric representation of the examination region. From such a 3D image, 2D images can be derived by slicing the volume along specific planes. The most common axes along which these 2D images are generated are the axial, sagittal, and coronal planes.

The plurality of 2D images may represent the entire 3D image or a portion of it, e.g. less than 100%, 90%, 80%, 70%, 60%, 50%, 40%, 20% or 10% or any other percentage. For example, it is possible that only every second, third, fourth or generally *n*^{th} 2D image is selected along an axis, where n is an integer greater than zero. In other words, the 3D image represents a volume and the 2D images generated based on the 3D image represent slices of the volume, whereby the slices may be directly adjacent to one another and fill the entire volume or may be distant from one another and fill only part of the volume.

A patch can be or represent a section of an image. The image can be a 2D image, a 2.5D image, a 3D image, a 4D image or any other *p*-dimensional image, wherein p is greater than 1. The section is usually also an image. The section can have the same dimension as the image it was generated from or a lower dimension. The plurality patches may together form the image or part of it.

A patch can be or represent a part of a whole slide image or other high-resolution image. A whole slide image is a high-resolution digital scan of a slide containing histological specimens. Such a whole slide image can be quite large in size, often reaching gigabytes of data. A patch of a high-resolution image refers to a smaller, localized section extracted from the high-resolution image. While the high-resolution image may represent an entire slice, a patch represents only a part of it. The plurality of patches generated from the high-resolution image may together represent the entire high-resolution image or only a part of it. The regions represented by the patches can be adjacent to each other or distant. The distance can be constant or variable. A patch is typically defined by its width and height in pixels. Common sizes for patches can vary based on the application but are often in the range of 256x256, 512x512, or 1024x1024 pixels.

In a further step a global embedding is generated based on the plurality of patches. The global embedding is a numerical representation of the plurality of patches.

An "embedding" usually refers to a low-dimensional representation of high-dimensional data, where similar data points are mapped to nearby points in the embedding space. This transformation helps in capturing the essential features and relationships of the data while reducing its dimensionality.

The term "feature vector" is sometimes used for such an embedding. However, it should be noted that the embedding is not necessarily a vector; it can also be a matrix or a tensor or some other arrangement of numbers. A feature vector is often constructed manually or through specific feature extraction techniques to represent the attributes of the data. An embedding is usually learned automatically through training a model on a specific task.

An embedding that represents a plurality of patches is also referred to in this disclosure as a "global embedding". An embedding that represents a single patch is also referred to in this disclosure as a "patch embedding".

In an embodiment of the present disclosure, the global embedding is based on patch embeddings. A patch embedding may be generated from each patch of the plurality of patches. The patch embeddings may then be combined into a global embedding.

In other words: the step "generating a global embedding based on the plurality of patches" may comprise:
- for each patch of the plurality of patches: generating a patch embedding based on the patch, wherein the patch embedding represents the patch;
- generating a global embedding based on the patch embeddings.

Each patch embedding is preferably generated by a trained machine learning model. Generating a patch embedding may comprise:
- inputting a patch into the trained machine learning model and receiving or determining a patch embedding from the trained machine learning model.

The trained machine learning model may be a pre-trained model.

The term "pre-trained" means that the machine learning model has been trained on a first task and/or with a first training data set. Such pre-training may be followed by further training (also called finetuning) on a second task and/or with a second training data set. The first task may be an auxiliary task on which the model can learn, e.g., the representation of the input data usually in an unsupervised or self-supervised training.

The (e.g., pre-trained) model may be a model of the Visual Geometry Group (such as VGG16 or VGG19; see, e.g., https://viso.ai/deep-learning/vgg-very-deep-convolutional-networks/), a residual network (such as ResNet50, ResNet101, ResNet152; see. e.g., https://viso.ai/deep-learning/resnet-residual-neural-network/), a densely connected convolutional network (such as DenseNet121, DenseNet169, DenseNet201; see, e.g., https://keras.io/api/applications/densenet/), DINO (self-DIstillation with NO labels; see, e.g., M. Caron et al.: Emerging Properties in Self-Supervised Vision Transformers, arXiv:2104.14294v2), DiNOv2 (DIscriminative NOise Contrastive Learning V2; see. e.g. M. Oquab et al.: DINOv2: Learning Robust Visual Features without Supervision, arXiv:2304.07193v1), CLIP (Contrastive Language-Image Pretraining; see, e.g., A. Radford et al.: Learning Transferable Visual Models From Natural Language Supervision, arXiv:2103.00020v1), a vision transformer (see, e.g., C.S. Kameswari et al.: An Overview of Vision Transformers for Image Processing: A Survey, International Journal of Advanced Computer Science and Applications Vol. 14, No. 8, 2023) or the like.

In an embodiment of the present disclosure, the machine learning model was trained and/or finetuned based on a contrastive learning approach. "Contrastive learning" is a self-supervised learning approach that aims to learn representations of data by contrasting similar and dissimilar pairs of examples. The core idea is to bring similar instances closer together in the embedding space while pushing dissimilar instances apart.

The contrastive learning approach uses positive pairs and negative pairs in training. In general, "positive pairs" are pairs of examples that are similar or belong to the same class. For example, two different patches representing the same region/slice/moment or two augmented versions of the same patch. "Negative pairs" are pairs of examples that are dissimilar or belong to different classes. For example, patches representing different regions/slices/moments or unrelated data points.

Data augmentation techniques are often applied to generate positive pairs. For instance, a patch may be augmented by applying transformations like cropping, flipping, and/or colour jittering.

Duplicates or near-duplicates of a variety of different patches may be generated using the methods described above and used to train and/or fine-tune a machine learning model. Each duplicate or near-duplicate forms a positive pair with the patch from which it was generated. Each patch forms a negative pair with every other patch of the variety of patches. Each duplicate or near-duplicate forms a negative pair with every patch from which it was not generated. Each duplicate or near-duplicate forms a positive pair with every other duplicate or near-duplicate if they were generated based on the same patch and a negative pair if they were generated based on different patches.

In an embodiment of the present disclosure, adversarial examples are incorporated into the training process. This allows visual data designed for an adversarial attack to be identified as near-duplicates and rendered harmless. Contrastive learning makes the embeddings robust towards adversarial perturbations in the input data. In addition, regularization methods such as dropout or weight decay may be used to improve feature robustness and reduce the vulnerability of the model to adversarial attacks.

Examples of adversarial attacks are:
Fast Gradient Sign Method (FGSM) attack involves adding small perturbations to the input data in the direction of the gradient of the loss function with respect to the input. The goal is to maximize the loss, causing the model to misclassify the input.

Projected Gradient Descent (PGD) attack is an iterative version of FGSM. PGD applies multiple small perturbations and projects the perturbed input back onto a region of valid inputs after each step. This makes the attack more effective and harder to defend against.

Carlini & Wagner attack minimizes the perturbation added to the input while ensuring that the perturbed input is misclassified. It is known for its effectiveness and ability to bypass many defense mechanisms.

Generative Adversarial Network (GAN) attack: GANs may be used to generate synthetic adversarial examples that are designed to fool the detection model.

Once the training data are provided, individual pairs may be fed into the machine learning model, and the model may be trained to make a prediction for each pair as to whether it is a positive or a negative pair. During training, the model may be trained to extract those features from the patches and summarize them in an embedding that is relevant for distinguishing whether a pair is a positive or a negative pair. Contrastive learning operates in an embedding space where each data point may be represented as a vector. The goal may be to learn a mapping from the input space (patches) to this embedding space.

A contrastive loss function may be used to optimize the model during training. One of the most common loss functions is the Contrastive Loss (e.g., Triplet Loss or InfoNCE Loss; see e.g.; https://lilianweng.github.io/posts/2021-05-31-contrastive/). Such loss functions encourage the model to minimize the distance between positive pairs while maximizing the distance between negative pairs. For example, in the case of InfoNCE, the loss is computed such that the similarity score of positive pairs is maximized relative to the similarity scores of negative pairs.

The training/finetuning of the machine model can be ended when a stop criterion is met. Such a stop criterion can be for example: a predefined maximum number of training steps/cycles/epochs has been performed, deviations between output data and target data can no longer be reduced by modifying the model parameters, a predefined minimum of the loss function is reached, and/or an extreme value (e.g., maximum or minimum) of another performance value is reached.

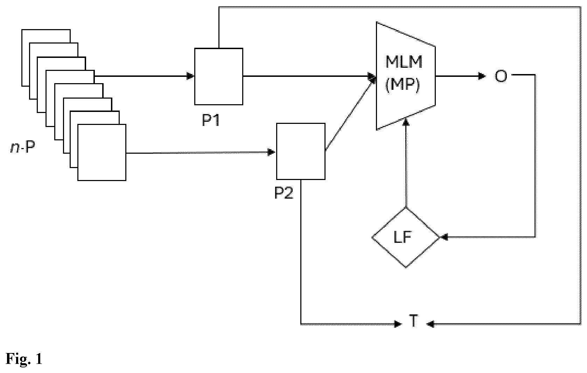

Fig. 1 shows an example of training a machine learning model. The machine learning model MLM is trained based on training data. The training data comprises a number *n* of patches P. For example, *n* can be 100 or more than 100 or more than 200 or more than 500 or any other number.

The patches P includes different patches and near-duplicates. The patches may also include duplicates. Fig. 1 shows how two patches, P1 and P2, are selected. The selection can be random or rule-based.

The pair of patches P1 and P2 can be a so-called positive pair or a so-called negative pair. If the patches P1 and P2 are different and not near-duplicates, then the pair of patches P1 and P2 is a negative pair. If one of the patches P1 or P2 is a duplicate or near-duplicate of the other patch P2 or P1, then the pair of patches is a positive pair. The patches P1 and P2 are fed into the machine learning model MLM.

The machine learning model MLM generates an output O. The output O is a prediction. The machine learning model MLM predicts whether the pair of patches P1 and P2 is a positive pair or a negative pair. The output O is compared with the target data T. The target data T indicates whether the pair P1 and P2 is a positive pair or a negative pair (ground truth). A loss function LF is used to determine a deviation between the output O and the target data T. The deviation is reduced by modifying model parameters MP of the machine learning model MLM.

The machine learning model MLM is usually configured to extract features from the patches that are fed to it and to summarize them in an embedding. The machine learning model MLM can be configured to perform classification based on the embeddings, i.e. to assign a pair of patches to one of two classes, wherein one class may represent positive pairs and the other class may represent negative pairs.

The machine learning model MLM can also include an autoencoder. The autoencoder can be configured and trained to reconstruct patches. In other words, in addition to distinguishing patches, the machine learning model MLM can be trained to solve a reconstruction task (see, for example, WO2022184516A1, WO2022228958A1, WO2023011943A1).

Once the model has been trained, it can be used to generate patch embeddings of new patches. To do this, a new patch can be fed to the model, and the model generates an embedding for the new patch. The term "new" means that the patch was not already used when training the model.

In an embodiment of the present disclosure, the machine learning model is an ensemble of different models. Each of the models can generate an embedding. The embeddings generated by different models can be combined into one embedding. Methods for combining multiple embeddings into a single embedding are described below.

So, the trained machine learning model can be used to generate a patch embedding for each patch of the variety of patches.

The patch embeddings can be used to generate a global embedding. For example, the patch embeddings can be combined to generate the global embedding.

There are several options to combine multiple patch embeddings into one global embedding.

Multiple embeddings can be combined into one embedding by concatenation, i.e., by sticking the embeddings end-to-end. If the patch embeddings are vectors, a longer vector or a matrix can be created by concatenation. If the patch embeddings are matrices, a matrix with more rows or columns or a tensor can be created by concatenation. This method (concatenation) retains all original information but may result in high-dimensional data.

Multiple embeddings can be combined into one embedding by summation, i.e., by summing the embeddings together elementwise.

Multiple embeddings can be combined into one embedding by performing a principal component analysis (PCA), and generating an embedding based on identified principal components.

Multiple embeddings can be combined into one embedding by averaging, i.e., by taking the elementwise mean (e.g., arithmetic means) of the embeddings.

Multiple embeddings can be combined into one embedding by weighted averaging. Weighted averaging is similar to averaging but each embedding and/or each dimension of an embedding is assigned a weight before averaging. The weights can be determined based on the importance of each embedding and/or dimension, for example. The weights can be learned, for example.

Multiple embeddings can be combined into one embedding using a neural network. The neural network may be configured and trained to receive multiple embeddings (e.g., a sequence of embeddings), and combine the multiple embeddings into a single embedding. The neural network may be configured and trained to receive multiple embeddings (e.g., a sequence of embeddings), and compress the multiple embeddings into a single embedding. The neural network may be or comprise an encoder of an autoencoder. The encoder of the autoencoder may be configured to receive multiple embeddings and compress them into a compressed embedding. During training, the decoder of the autoencoder may be trained to reconstruct the embeddings from the compressed embedding generated by the encoder.

It is possible that different combination methods are combined.

In an embodiment of the present disclosure, the patch embeddings are clustered, a cluster embedding is generated for each cluster based on the patch embeddings belonging to the cluster, and a global embedding is generated based on the cluster embeddings.

It has been found that for many visual data, the patch embeddings can be assigned to a defined number of clusters. For example, the number of clusters can be 3 or 4 or 5 or 6 or 7 or 8 or 9 or 10 or more than 10. The number of clusters may be determined adaptively, e.g., using the Elbow method. The Elbow method is a heuristic used in cluster analysis to determine the optimal number of clusters in a dataset. It is commonly applied in the context of the K-means clustering algorithm, though it can be used with other clustering methods as well. The main idea behind the Elbow method is to find a point where adding more clusters does not significantly improve the clustering performance, which is often visualized as an "elbow" in a plot.

There are a variety of clustering methods that can be used to cluster patch embeddings, some examples are provided below. The present disclosure is not limited to a certain clustering method.

K-means is a widely used clustering algorithms. It partitions the data into K clusters by assigning each point to the nearest cluster centroid and then updating the centroids based on the assigned points. K-means clustering is simple to implement, efficient for large datasets, and works well when clusters are spherical and evenly sized. K-means requires specifying the number of clusters (K) in advance and is sensitive to initialization and outliers.

Hierarchical clustering builds a tree-like structure (dendrogram) by either agglomerating (bottom-up approach) or dividing (top-down approach) the data points based on their distances. Hierarchical clustering does not require specifying the number of clusters in advance and may provide a visual representation of the clustering structure.

Agglomerative clustering is a type of hierarchical clustering that merges clusters based on distance metrics. It starts with each point as its own cluster and iteratively merges the closest pairs of clusters until a stopping criterion is met.

Gaussian Mixture Models (GMM) assume that the data is generated from a mixture of several Gaussian distributions. It uses the Expectation-Maximization (EM) algorithm to estimate the parameters of the Gaussian components.

Deep Embedding Clustering (DEC) is a method that combines deep learning with clustering techniques to learn both feature representations and cluster assignments simultaneously. The main idea is to leverage the power of deep neural networks to extract meaningful embeddings from the data, which can then be clustered effectively.

To cluster the patch embeddings, the similarity of patch embeddings representing temporally neighbouring frames or spatially neighbouring regions can also be compared. If there are jump discontinuities in similarity along a spatial axis (e.g., in case of 2D images representing slices of a 3D volume) or along a time axis (e.g., in case of video frames), this is an indication that the patch embeddings separated by the jump discontinuities differ significantly from each other and should be assigned to different clusters. This method can also be used to determine or estimate the number of clusters.

It is also possible to combine different clustering methods.

The clusters can be represented by cluster embeddings. For each cluster, a cluster embedding can be generated that represents the cluster. There are various options for doing this.

One option is to select a patch embedding for each cluster that lies within the cluster. This selected patch embedding may then represent the cluster. A patch embedding may be selected according to one or more rules or randomly. For example, the patch embedding that lies closest to the centre of the cluster may be selected.

Another possibility is to use the vector that defines the centre of the cluster in the embedding space as the cluster embedding.

Another option is to combine the patch embeddings of a cluster into a single cluster embedding. Methods for combining multiple embeddings into a single embedding are described above.

The cluster embeddings can then be combined into a global embedding. The methods described above can also be used for this. The number of clusters may be included in the global embedding as an additional feature.

The global embedding is a representation of the visual data. The global embedding represents the visual data in a way that makes identifying duplicates and near-duplicates particularly efficient and effective: the global embedding usually has a lower dimension than the visual data; in addition, the global embedding concentrates those features of the visual data that distinguish it and its near-duplicates from different visual data.

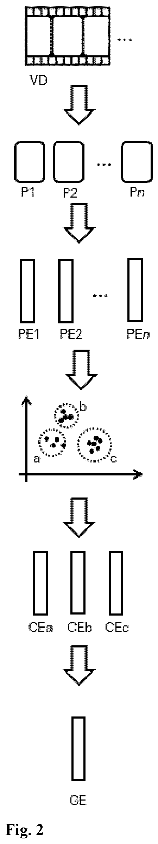

Fig. 2 shows an example of how a global embedding is generated.

The starting point for the generation is visual data VD. In the example shown in Fig. 2, the visual data VD is a video.

A plurality of patches P1, P2, ..., P*n* is generated based on the visual data VD. Each patch may be a frame of the video.

A patch embedding is generated for each patch. Patch embedding PE1 is a numerical representation of the patch P1, patch embedding PE2 is a numerical representation of the patch P2, ..., and patch embedding PEn is a numerical representation of the patch Pn. For example, the trained machine learning model described in relation to Fig. 1 can be used to generate the patch embeddings.

The patch embeddings EP1, EP2, ..., EP*n* are clustered. In the example shown in Fig. 2, three clusters result: cluster a, cluster b and cluster c.

A cluster embedding is generated for each cluster that represents the cluster. Cluster embedding CEa represents cluster a, cluster embedding CEb represents cluster b, and cluster embedding CEc represents cluster c.

A global embedding GE is generated based on the cluster embeddings Cea, CEb, and CEc.

In a further step, the global embedding is compared with global embeddings of other visual data. This other visual data is also referred to in this disclosure as reference visual data. The global embeddings of the reference visual data are also referred to in this disclosure as reference global embeddings.

The reference visual data has the same properties as the visual data. In other words, what is described in this disclosure in relation to the visual data also applies analogously to the reference visual data.

A reference global embedding that represents reference visual data is usually generated in the same way as the global embedding that represents the visual data; i.e. reference patches can be generated based on the reference visual data; a reference patch embedding can be generated for each reference patch; and the reference patch embeddings can be combined into a reference global embedding. Combining the reference patch embeddings into a reference global embedding may comprise clustering the reference patch embeddings, generating reference cluster embeddings and combining reference cluster embeddings into the reference global embedding.

The goal of comparing the global embedding of the visual data with reference global embeddings of other visual data (reference visual data) is to identify duplicates and near-duplicates of the visual data.

The comparison can be made in a single-step or a hierarchical multi-step procedure.

In the one-step method, the global embedding can be compared with any of a plurality of reference embeddings, which may be stored in a database.

The comparison may include determining a similarity and/or a dissimilarity.

Similarity indicates how similar two embeddings are. Dissimilarity indicates how different two embeddings are. Similarity can be expressed with a similarity score, which usually correlates positively with similarity, i.e. the more similar two embeddings are, the higher the similarity score. Analogously, dissimilarity can be expressed with a dissimilarity or distance score, which usually correlates positively with dissimilarity, i.e. the more dissimilar (different) two embeddings are, the higher the similarity score.

Examples of similarity scores are:
- dot product: the dot product of two embeddings can be used as a measure of similarity. A higher dot product indicates greater similarity.
- cosine similarity: the cosine similarity measures the cosine of the angle between two vectors, indicating how similar they are irrespective of their magnitude. A cosine similarity of 1 indicates that the vectors are identical, while a value of 0 indicates orthogonality.
- Jaccard similarity: for binary embeddings, Jaccard similarity can be used to measure the similarity between two sets by comparing the size of their intersection to the size of their union.

Examples of distance scores are:
- Euclidean distance: the Euclidean distance measures the straight-line distance between two points in Euclidean space.
- Manhattan distance (L1 distance): the Manhattan distance measures the sum of the absolute differences between the coordinates of the points.

Further examples of distance scores are Chebyshev distance, Minkowski distance, weighted Minkowski distance, Mahalanobis distance, Hamming distance, Canberra distance, Bray Curtis distance, and combinations thereof.

A distance score *d*(E₁, E₂) between a first embedding E₁ and a second embedding E₂ can be converted into a similarity score *s*(E₁, E₂), e.g., by the following equation: $s \left({E}_{1}, {E}_{2}\right) = \frac{1}{1 + d \left({E}_{1}, {E}_{2}\right)}$

In other words: the use of a similarity value is equivalent (in terms of patent infringement) to the use of a dissimilarity value. For the sake of simplicity, the further procedure is described below using the example of a similarity value that correlates positively with similarity, without the intention of limiting the present disclosure to this embodiment.

In an embodiment of the present disclosure, a similarity value is determined for each pair consisting of the global embeddings and a reference global embedding, and the similarity value is compared to a predefined threshold. The threshold can, for example, be set by a user. The threshold can also be made variable, i.e. a user can adjust the value. The threshold can be also learned or derived from the pattern of the visual data by leveraging machine learning models and/or other statistical methods.

If the similarity score is less than the threshold, it can be assumed that the reference visual data is different from the visual data.

If the similarity score is greater than the threshold, it can be assumed that the reference visual data is a duplicate or near-duplicate of the visual data.

Those reference visual data for which the similarity value is greater than the threshold value can be output. Outputting data and/or information can mean displaying the data/information on a monitor, printing it on a printer, storing it in a data memory and/or transmitting it to a separate computer system.

The duplicates and near-duplicates can be sorted according to their similarity scores.

A hierarchical multi-level process is also possible. There can be two thresholds for this process, one upper and one lower. The thresholds can be set by a user and/or made variable.

If the similarity score is less than the lower threshold, it can be assumed that the reference visual data is different from the visual data.

If the similarity score is greater than the upper threshold, it can be assumed that the reference visual data is a duplicate or near-duplicate of the visual data.

If the similarity value is greater than the lower threshold and less than the upper threshold, there is some uncertainty as to whether the reference visual data is a duplicate or near-duplicate of the visual data.

To clarify whether the reference visual data is a duplicate or near-duplicate of the visual data, a further similarity analysis can be performed. In such further similarity analysis, it is possible to compare the reference visual data directly with the visual data. For this comparison, the similarity and/or distance measures mentioned can be used.

Again, one or more thresholds can be defined to decide whether reference visual data is similar to the visual data, i.e. whether it is a duplicate, near-duplicate, or different visual data.

It is also possible to compare each patch embedding with each reference embedding. If two data sets are the same and the embeddings have been generated in the same way, then there is a reference embedding for each embedding that matches the embedding. For similar data sets, there are more matching or similar pairs than for dissimilar data sets. The number of identical or similar pairs can be used as a measure of the similarity of the data sets.

In order to avoid having to compare each patch embedding with each reference patch embedding, efficient techniques such as Approximate Nearest Neighbours (ANN) algorithms may be used. ANN algorithms utilize approximate nearest neighbour search algorithms such as FAISS (Facebook AI Similarity Search), Annoy (Approximate Nearest Neighbors Oh Yeah), and/or HNSW (Hierarchical Navigable Small World graphs). These methods allow to find the most similar reference patch embeddings for each patch embedding without comparing each embedding pair exhaustively.

Another way to speed up processing is through sampling. Instead of comparing the embedding of each patch, a subset of embeddings (e.g., every n^{th} embedding) can be selected from both data sets. This reduces the number of comparisons while still providing a representative sample.

Statistical tests (e.g., t-tests) can be used to determine whether the similarity values between two embedding sets differ significantly from what would be expected by chance.

By using multiple CPU (central processing unit) cores or GPUs (GPU: graphics processing unit), the similarity calculations can be parallelized across embeddings or sets of embeddings to speed up the process.

The reference visual data, which has a defined similarity to the visual data, can be output, i.e. displayed on a monitor, printed, stored in a data memory and/or transmitted to a separate computer system.

The reference visual data sets can be sorted according to their similarity to the visual data.

In the case of duplicates or near-duplicates, the duplicates or near-duplicates may be deleted.

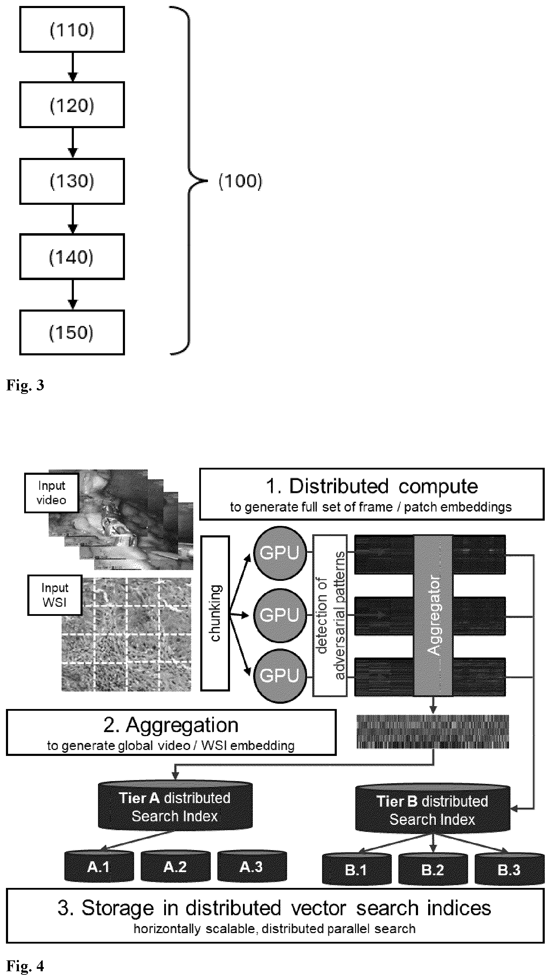

Fig. 3 shows a flowchart of the computer-implemented method of the present disclosure. The method (100) comprises the steps:
- (110): receiving visual data,
- (120): generating a plurality of patches based on the visual data, wherein each patch represents a portion of the visual data,
- (130): generating a global embedding based on the plurality of patches, wherein the global embedding represents the plurality of patches,
- (140): determining a similarity of the global embedding with one or more reference global embeddings, wherein each reference global embedding represents a plurality of reference patches of reference visual data,
- (150): identifying visual reference data for which the similarity is greater than a predefined threshold.

The operations in accordance with the teachings herein may be performed by at least one computer specially constructed for the desired purposes or general-purpose computer specially configured for the desired purpose by at least one computer program stored in a typically non-transitory computer readable storage medium.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

Another subject of the present disclosure is a computer system. A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the computer-implemented method of the present disclosure.

In an embodiment of the present disclosure the computer system comprises:
a processing unit; and
a memory that stores a computer program configured, when executed by the processing unit, to cause the computer system to:
   - receive visual data,
   - generate a plurality of patches based on the visual data, wherein each patch represents a portion of the visual data,
   - generate a global embedding based on the plurality of patches, wherein the global embedding represents the plurality of patches,
   - determine a similarity of the global embedding with one or more reference global embeddings, wherein each reference global embedding represents a plurality of reference patches of reference visual data,
   - identify visual reference data for which the similarity is greater than a predefined threshold,
   - output the identified visual reference data.

In an embodiment, the computer system includes a data storage in which reference global embeddings are stored for a variety of reference visual data. The data storage can also store reference patch embeddings for the variety of reference visual data.

The computer system may be configured to generate and store a global embedding and/or a variety of patch embeddings for each visual data set that is or will be stored.

The computer system may operate on different modalities, e.g., radiological 2D and 3D image data, digital pathology images and/or videos (such as surgical, endoscopic and/or ultrasonic videos). Each modality exhibits specific data characteristics and formats which may influence algorithm design choices. For example, detecting surgical video (near-) duplicates requires comparing variable length frame sequences with high temporal redundancy whereas detecting duplicates in the field of digital pathology requires the comparison of giga-pixel sized, high-resolution images with areas of spatially redundant data.

In particular, for data-intensive modalities, the modality-specific data properties (such as spatial and/or temporal redundancy) may be utilized to apply approaches for effectively reducing the total amount of raw data that needs to be processed and stored for duplicate detection.

As described above, Fig. 2 illustrates in an exemplary fashion the process of generating global embeddings for high-throughput surgical video deduplication. A similar approach can be employed for giga-pixel sized digital pathology images. This can be based on an approach with multiple resolutions and tiles to first generate local patch descriptors that are then used to derive global whole slide image (WSI) embeddings, see Fig. 4. Fig. 4 shows a distributed generation and storage of embeddings used for hierarchical similarity search.

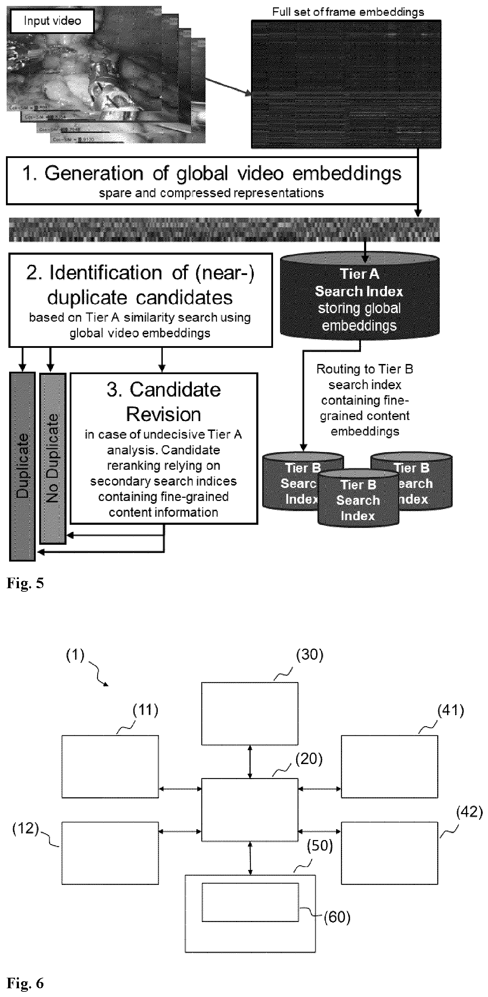

The implementation of deduplication mechanisms can result in a significant performance overhead. Therefore, it is important to evaluate potential performance bottlenecks and identify ways to scale and distribute computing resources. The key principles of a solution to mitigate this problem may be (i) compression and sparsification of the data representation, (ii) parallelized similarity search, and (iii) hierarchical information models. Fig. 5 shows a hierarchical similarity search scheme for the recognition of (nearly) identical videos of WSI and surgical procedures, which relies on global video descriptions in a first stage (stage A) to reduce the computational load. A computationally expensive full patch/frame analysis (level B) is only performed as a fallback option if level A is inconclusive, as indicated by a low-level A confidence score. Ultimately, a careful balance between computational resources (e.g., avoiding unnecessary stage B executions) and end-to-end detection performance (e.g., high system F1 score) is required to meet the platform product's latency and resource requirements.

In an embodiment of the present disclosure, the computer system is designed to scale across distributed compute nodes (CPU and/or GPU) and uses distributed vector search indices that allow low module latencies. Figure 4 shows how embeddings may be generated and stored in distributed fashion in the data-intensive modalities. For surgical videos, frame embeddings can be aggregated to global content descriptors, and for WSIs for digital pathology, local patch embeddings allow the derivation of global slide embeddings. In this scenario, GPU resources can process different frame chunks or patch subsets in parallel, allowing the total computation times to be limited by horizontal scaling, regardless of the length of the input video or the WSI dimension. For storage and similarity searches, the descriptors can be stored in a distributed manner across different (hierarchical) vector search indices, enabling fast parallelized queries.

Fig. 6 illustrates a computer system (1) according to some example implementations of the present disclosure in more detail. The computer may include one or more of each of a number of components such as, for example, processing unit (20) connected to a memory (50) (e.g., storage device).

The processing unit (20) may be composed of one or more processors alone or in combination with one or more memories. The processing unit is generally any piece of computer hardware that is capable of processing information such as, for example, data, computer programs and/or other suitable electronic information. The processing unit is composed of a collection of electronic circuits some of which may be packaged as an integrated circuit or multiple interconnected integrated circuits (an integrated circuit at times more commonly referred to as a "chip"). The processing unit may be configured to execute computer programs, which may be stored onboard the processing unit or otherwise stored in the memory (50) of the same or another computer.

The processing unit (20) may be a number of processors, a multi-core processor or some other type of processor, depending on the particular implementation. Further, the processing unit may be implemented using a number of heterogeneous processor systems in which a main processor is present with one or more secondary processors on a single chip. As another illustrative example, the processing unit may be a symmetric multi-processor system containing multiple processors of the same type. In yet another example, the processing unit may be embodied as or otherwise include one or more ASICs, FPGAs or the like. Thus, although the processing unit may be capable of executing a computer program to perform one or more functions, the processing unit of various examples may be capable of performing one or more functions without the aid of a computer program. In either instance, the processing unit may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions may be stored in memory, and executed by processing unit that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

Further embodiments are disclosed below. These embodiments are not necessarily subject matter that is covered by patent protection. As is known to those skilled in the art of patent protection, the scope of protection of a patent is defined by the patent claims. The description and drawings are to be used to interpret the patent claims. The embodiments described below are part of the description and not of the patent claims. The following embodiments are intended to give the reader an indication of how various features described in this disclosure can be combined. They are therefore part of the present technical teaching and should not be confused with the subject matter of the patent claims.

Embodiment 1: A computer-implemented method comprising:
- receiving visual data,
- generating a plurality of patches based on the visual data, wherein each patch represents a portion of the visual data,
- generating a global embedding based on the plurality of patches, wherein the global embedding represents the plurality of patches,
- determining a similarity of the global embedding with one or more reference global embeddings, wherein each reference global embedding represents a plurality of reference patches of reference visual data,
- identifying visual reference data for which the similarity is greater than a predefined threshold.

Embodiment 2: The method of embodiment 1, wherein the visual data is or comprises medical visual data, wherein the medical visual data represents an examination region of an examination object.

Embodiment 3: The method of embodiment 2, wherein the examination object is a human and the examination region is or comprises an organ or part of an organ of the human.

Embodiment 4: The method of any one of embodiments 1 to 3, wherein the portion of the visual data is less than 50%.

Embodiment 5: The method of any one of embodiments 1 to 4, wherein the visual data is or comprises a video and each patch is or comprises a frame of the video.

Embodiment 6: The method embodiment 5, wherein each reference visual data is or comprises a video and each reference patch of the reference visual data is or comprises a frame of the video.

Embodiment 7: The method of any one of embodiments 1 to 4, wherein the visual data is or comprises a 3D image representing a volume and each patch is or comprises a 2D image representing a slice within the volume.

Embodiment 8: The method embodiment 7, wherein each reference visual data is or comprises a 3D image representing a reference volume and each reference patch of the reference visual data is or comprises a 2D image representing a reference slice within the reference volume.

Embodiment 9: The method of any one of embodiments 1 to 4, wherein the visual data is or comprises a high-resolution image and each patch is or comprises a section of the high-resolution image.

Embodiment 10: The method of embodiment 10, wherein each reference visual data is or comprises a high-resolution image and each reference patch of the reference visual data is or comprises a section of the high-resolution image.

Embodiment 11: The method of any one of embodiments 1 to 10, wherein generating the global embedding comprises:
- for each patch of the plurality of patches: generating a patch embedding based on the patch, wherein the patch embedding represents the patch;
- generating a global embedding based on the patch embeddings.

Embodiment 12: The method of any one of embodiments 1 to 11, wherein generating a patch embedding comprises:
- inputting the patch into a trained machine learning model,
- receiving or determining the patch embedding from the trained machine learning model.

Embodiment 13: The method of embodiment 12, wherein the trained machine learning model is configured to generate a patch embedding based on a patch.

Embodiment 14: The method of any one of embodiments 12 or 13, wherein the trained machine learning model was trained based on a contrastive learning approach.

Embodiment 15: The method of any one of embodiments 12 to 14, wherein the trained machine learning model was trained on training data, wherein the training data comprised, duplicates and near-duplicates of a plurality of patches.

Embodiment 16: The method of any one of embodiments 12 to 15, wherein the trained machine learning model was trained to distinguish different patches from duplicates or near-duplicates of patches.

Embodiment 17: The method of any one of embodiments 12 to 16, wherein the trained machine learning model was trained to indicate whether or to what extent a pair of patches is a positive pair or a negative pair, wherein a negative pair is a pair of patches that are different and a positive pair consists of a patch and its duplicate or near-duplicate.

Embodiment 18: The method of any one of embodiments 12 to 17, wherein the trained machine learning model was trained to assign a pair of patches to one of two classes, a first class or a second class, wherein the first class represents patches that have a predefined similarity to each other and the second class represents patches that do not have the predefined similarity.

Embodiment 19: The method of any one of embodiments 12 to 18, wherein trained machine learning model was trained to assign a pair of patches to one of two classes, a first class or a second class, wherein the first class represents patches whose similarity value is above a defined threshold and the second class represents patches whose similarity is below the defined threshold.

Embodiment 20: The method of any one of embodiments 12 to 19, wherein the training data comprises a plurality of positives pairs and negative pairs, wherein each positive pair consists of a patch and a duplicate or near-duplicate of the patch and each negative pair consists of two different patches.

Embodiment 21: The method of embodiment 20, wherein the near-duplicate of the patch is characterized by a defined similarity to the patch.

Embodiment 22: The method of any one of embodiments 20 or 21, wherein the near-duplicate of the patch is characterized by a similarity score that quantifies the similarity between the patch and the near-duplicate and is greater than a predefined threshold.

Embodiment 23: The method of any one of embodiments 12 to 22, wherein the training comprised:
- receiving or providing a plurality of positive and negative pairs of patches as input data, and, for each pair, information as to whether the pair is a positive or a negative pair as target data,
- inputting a pair of patches into the model,
- receiving an output from the machine learning model, the output indicating whether the pair is a positive or a negative pair,
- determining a deviation between the output and the training data,
- reducing the deviation by modifying parameters of the machine learning model.

Embodiment 24: The method of any one of embodiments 12 to 23, wherein for each patch of a variety of patches in the training data, one or more near-duplicates of the patch are generated using one or more of the following techniques:
- saving the patch and/or the underlying visual data in a different data format,
- changing the spatial resolution of the patch and/or the underlying visual data,
- changing the temporal resolution of the underlying visual data,
- changing the dimension of the patch and/or the underlying visual data,
- compressing the patch and/or the underlying visual data and/or changing the level of compression of the patch and/or the underlying visual data and/or compressing the patch and/or the underlying visual data using a different compression algorithm,
- generating an adversarial duplicate of the patch and/or the underlying visual data,
- cropping the patch and/or the underlying visual data,
- padding the cropped patch and/or the underlying cropped visual data,
- rotating the patch and/or the underlying visual data,
- translating text and/or audio in the patch and/or the underlying visual data,
- resizing the patch and/or the underlying visual data,
- upscaling the patch and/or the underlying visual data,
- downscaling the patch and/or the underlying visual data,
- changing the colour depth of the patch and/or the underlying visual data,
- changing the colour space of the patch and/or the underlying visual data,
- adjusting the colour of the patch and/or the underlying visual data,
- changing contrast of the patch and/or the underlying visual data,
- changing brightness of the patch and/or the underlying visual data,
- changing the histogram of the patch and/or the underlying visual data,
- adding noise to the patch and/or the underlying visual data,
- blurring the patch and/or the underlying visual data,
- sharpening the patch and/or the underlying visual data,
- filtering the patch and/or the underlying visual data,
- adding a watermark and/or imprint and/or machine overlay to the patch and/or the underlying visual data,
- removing a watermark and/or imprint and/or machine overlay from the patch and/or the underlying visual data,
- modify one or more patch elements (e.g. pixel or voxel) of the patch and/or the underlying visual data,
- deforming the patch and/or the underlying visual data,
- transforming the patch and/or the underlying visual data.

Embodiment 25: The method of any one of embodiments 1 to 24, wherein generating a global embedding based on the patch embeddings comprises:
- combining the patch embeddings into the global embedding.

Embodiment 26: The method of embodiment 25, wherein combining the patch embeddings into the global embedding comprises:
- concatenating the patch embeddings, or
- elementwise summing the patch embeddings, or
- performing a principal component analysis and generating the global embedding based on principal components, or
- elementwise averaging the patch embeddings.

Embodiment 27: The method of any one of embodiments 1 to 26, wherein generating a global embedding based on the patch embeddings comprises:
- selecting patch embeddings and combining the selected patch embeddings into the global embedding.

Embodiment 28: The method of embodiment 27, wherein combining the selected patch embeddings into the global embedding comprises:
- concatenating the selected patch embeddings, or
- elementwise summing the selected patch embeddings, or
- performing a principal component analysis and generating the global embedding based on principal components, or
- elementwise averaging the selected patch embeddings.

Embodiment 29: The method of any one of embodiments 1 to 28, wherein generating a global embedding based on the patch embeddings comprises:
- clustering the patch embeddings into a number of clusters,
- generating a cluster embedding for each cluster of the number of clusters,
- combining the cluster embeddings into the combined embedding.

Embodiment 30: The method of embodiment 29, wherein generating the cluster embedding comprises:
- concatenating the patch embeddings of the cluster, or
- elementwise summing the patch embeddings of the cluster, or
- performing a principal component analysis and generating the global embedding based on principal components, or
- elementwise averaging the patch embeddings of the cluster, or
- selecting a patch embedding of the cluster as the cluster embedding,
- setting the vector that defines the center of the cluster as the cluster embedding.

Embodiment 31: The method of any one of embodiments 29 or 30, wherein combining the cluster embeddings into the global embedding comprises:
- concatenating the cluster embeddings, or
- elementwise summing the cluster embeddings, or
- performing a principal component analysis and generating the global embedding based on principal components, or
- elementwise averaging the cluster embeddings.

Embodiment 32: The method of any one of embodiments 1 to 31, wherein determining a similarity of the global embedding with a reference global embedding comprises:
- determining a similarity score and/or a dissimilarity score of the global embedding and the reference global embedding.

Embodiment 33: The method of embodiment 32, wherein the similarity score and/or the dissimilarity score is/are selected from or based on one or more of the following:
- dot product
- cosine similarity
- Jaccard similarity.
- Euclidean distance:
- Manhattan distance
- Chebyshev distance,
- Minkowski distance,
- weighted Minkowski distance,
- Mahalanobis distance,
- Hamming distance,
- Canberra distance,
- Bray Curtis distance.

Embodiment 34: The method of any one of embodiments 1 to 33, wherein determining a similarity of the global embedding with one or more reference global embeddings comprises:
- determining a similarity score for each pair of a reference global embedding and the global embedding.

Embodiment 35: The method of any one of embodiments 1 to 34, wherein identifying visual reference data for which the similarity is greater than a predefined threshold comprises:
- comparing the similarity score with a predefined threshold,
- in case the similarity score is greater than the predefined threshold: outputting and/or storing the reference visual data as duplicate or near-duplicate.

Embodiment 36: The method of any one of embodiments 1 to 35, wherein identifying visual reference data for which the similarity is greater than a predefined threshold comprises:
- comparing the similarity score with a predefined lower threshold and a predefined upper threshold,
- in case the similarity score is greater than the upper predefined threshold: outputting and/or storing the reference visual data as duplicate or near-duplicate,
- in case the similarity score is greater than the lower threshold and less than the upper threshold: conducting a further analysis of the similarity of the visual data with the reference visual data.

Embodiment 37: The method of embodiment 36, wherein conducting a further analysis comprises: determining a similarity between the visual data and the reference visual data.

Embodiment 38: The method of embodiment 36, wherein conducting a further analysis comprises: determining a similarity between one or more patch embeddings with one or more reference patch embeddings.

Embodiment 39: A computer system comprising:
a processing unit; and
a memory that stores a computer program configured, when executed by the processing unit, to cause the computer system to:
   - receive visual data,
      - generate a plurality of patches based on the visual data, wherein each patch represents a portion of the visual data,
      - generate a global embedding based on the plurality of patches, wherein the global embedding represents the plurality of patches,
      - determine a similarity of the global embedding with one or more reference global embeddings, wherein each reference global embedding represents a plurality of reference patches of reference visual data,
      - identify visual reference data for which the similarity is greater than a predefined threshold,
      - output the identified visual reference data.

Embodiment 40: A computer system comprising:
a processing unit; and
a memory that stores a computer program configured, when executed by the processing unit, to cause the computer system to perform the method of any one of embodiments 1 to 38.

Embodiment 41: The computer system of any one of embodiments 39 or 40, further comprising a data storage in which reference global embeddings are stored for a variety of reference visual data.

Embodiment 42: The computer system of embodiment 41, wherein the data storage stores reference patch embeddings for the variety of reference visual data.

Embodiment 43: The computer system of any one of embodiments 39 to 42, wherein the computer system is configured to generate and store a global embedding and/or a variety of patch embeddings for each visual data set that is or will be stored on a data storage of the computer system.

Embodiment 44: The computer system of any one of embodiments 39 to 43, wherein computer system is designed to scale across distributed compute nodes.

Embodiment 45: The computer system of any one of embodiments 39 to 44, wherein the computer system is configured to use distributed vector search indices.

Embodiment 46: A non-transitory computer readable storage medium having stored thereon a computer program that, when executed by a processing unit of a computer system, cause the computer system to execute the following steps:
- receiving visual data,
- generating a plurality of patches based on the visual data, wherein each patch represents a portion of the visual data,
- generating a global embedding based on the plurality of patches, wherein the global embedding represents the plurality of patches,
- determining a similarity of the global embedding with one or more reference global embeddings, wherein each reference global embedding represents a plurality of reference patches of reference visual data,
- identifying visual reference data for which the similarity is greater than a predefined threshold.

Embodiment 47: A non-transitory computer readable storage medium having stored thereon a computer program that, when executed by a processing unit of a computer system, cause the computer system to execute the method of any one of embodiments 1 to 38.

## Claims

1. A computer-implemented method for identifying duplicates and/or near-duplicates, the method comprising:
- receiving visual data,
- generating a plurality of patches based on the visual data, wherein each patch represents a portion of the visual data,
- generating a global embedding based on the plurality of patches, wherein the global embedding represents the plurality of patches,
- determining a similarity of the global embedding with one or more reference global embeddings, wherein each reference global embedding represents a plurality of reference patches of reference visual data,
- identifying visual reference data for which the similarity is greater than a predefined threshold.

2. The method of claim 1, wherein the visual data is or comprises medical visual data, wherein the medical visual data represents an examination region of an examination object, wherein the examination object is a human and the examination region is or comprises an organ or part of an organ of the human.

3. The method of claim 1 or 2, wherein the visual data is or comprises a video, each patch is or comprises a frame of the video, each reference visual data is or comprises a reference video and each reference patch of the reference visual data is or comprises a frame of the reference video,
or
the visual data is or comprises a 3D image representing a volume, each patch is or comprises a 2D image representing a slice within the volume, each reference visual data is or comprises a 3D image representing a reference volume and each reference patch of the reference visual data is or comprises a 2D image representing a reference slice within the reference volume,
or
the visual data is or comprises an image, each patch is or comprises a section of the image, each reference visual data is or comprises a reference image, and each reference patch of the reference visual data is or comprises a section of the reference image,
or
the visual data is or comprises a high-resolution image, each patch is or comprises a section of the high-resolution image, each reference visual data is or comprises a reference high-resolution image and each reference patch of the reference visual data is or comprises a section of the reference high-resolution image.

4. The method of any one of claims 1 to 3, wherein generating the global embedding comprises:
- for each patch of the plurality of patches: generating a patch embedding based on the patch, wherein the patch embedding represents the patch;
- generating a global embedding based on the patch embeddings.

5. The method of any one of claims 1 to 4, wherein generating a patch embedding comprises:
- inputting the patch into a trained machine learning model,
- receiving or determining the patch embedding from the trained machine learning model,
wherein the trained machine learning model was trained based on a contrastive learning approach.

6. The method of claim 5, wherein the trained machine learning model was trained on training data, wherein the training data comprised, duplicates and near-duplicates of a plurality of patches.

7. The method of any claim 5 or 6, wherein training of the trained machine learning model comprised:
- receiving or providing a plurality of positive and negative pairs of patches as input data, and, for each pair, information as to whether the pair is a positive or a negative pair as target data,
- inputting a pair of patches into the model,
- receiving an output from the machine learning model, the output indicating whether the pair is a positive or a negative pair,
- determining a deviation between the output and the training data,
- reducing the deviation by modifying parameters of the machine learning model.

8. The method of any one of claims 5 to 7, wherein the trained machine learning model was trained on training data, wherein for each patch of a variety of patches in the training data, one or more near-duplicates of the patch are generated using one or more of the following techniques:
- saving the patch and/or the underlying visual data in a different data format,
- changing the spatial resolution of the patch and/or the underlying visual data,
- changing the temporal resolution of the underlying visual data,
- changing the dimension of the patch and/or the underlying visual data,
- compressing the patch and/or the underlying visual data and/or changing the level of compression of the patch and/or the underlying visual data and/or compressing the patch and/or the underlying visual data using a different compression algorithm,
- generating an adversarial duplicate of the patch and/or the underlying visual data,
- cropping the patch and/or the underlying visual data,
- padding the cropped patch and/or the underlying cropped visual data,
- rotating the patch and/or the underlying visual data,
- translating text and/or audio in the patch and/or the underlying visual data,
- resizing the patch and/or the underlying visual data,
- upscaling the patch and/or the underlying visual data,
- downscaling the patch and/or the underlying visual data,
- changing the colour depth of the patch and/or the underlying visual data,
- changing the colour space of the patch and/or the underlying visual data,
- adjusting the colour of the patch and/or the underlying visual data,
- changing contrast of the patch and/or the underlying visual data,
- changing brightness of the patch and/or the underlying visual data,
- changing the histogram of the patch and/or the underlying visual data,
- adding noise to the patch and/or the underlying visual data,
- blurring the patch and/or the underlying visual data,
- sharpening the patch and/or the underlying visual data,
- filtering the patch and/or the underlying visual data,
- adding a watermark and/or imprint and/or machine overlay to the patch and/or the underlying visual data,
- removing a watermark and/or imprint and/or machine overlay from the patch and/or the underlying visual data,
- modify one or more patch elements (e.g. pixel or voxel) of the patch and/or the underlying visual data,
- deforming the patch and/or the underlying visual data,
- transforming the patch and/or the underlying visual data.

9. The method of any one of claims 1 to 8, wherein generating a global embedding based on the patch embeddings comprises:
- combining the patch embeddings into the global embedding,
wherein combining the patch embeddings into the global embedding comprises:
- concatenating the patch embeddings, or
- elementwise summing the patch embeddings, or
- performing a principal component analysis and generating the global embedding based on principal components, or
- elementwise averaging the patch embeddings, or
- using a neural network to combine the patch embedding.

10. The method of any one of claims 1 to 9, wherein generating a global embedding based on the patch embeddings comprises:
- selecting patch embeddings and combining the selected patch embeddings into the global embedding,
wherein combining the selected patch embeddings into the global embedding comprises:
- concatenating the selected patch embeddings, or
- elementwise summing the selected patch embeddings, or
- performing a principal component analysis and generating the global embedding based on principal components, or
- elementwise averaging the selected patch embeddings, or
- using a neural network to combine the selected patch embeddings.

11. The method of any one of claims 1 to 10, wherein generating a global embedding based on the patch embeddings comprises:
- clustering the patch embeddings into a number of clusters,
- generating a cluster embedding for each cluster of the number of clusters,
- combining the cluster embeddings into the combined embedding.
wherein generating the cluster embedding comprises:
- concatenating the patch embeddings of the cluster, or
- elementwise summing the patch embeddings of the cluster, or
- performing a principal component analysis and generating the global embedding based on principal components, or
- elementwise averaging the patch embeddings of the cluster, or
- using a neural network to combine the patch embeddings,
- selecting a patch embedding of the cluster as the cluster embedding, or
- setting the vector that defines the center of the cluster as the cluster embedding.
wherein combining the cluster embeddings into the global embedding comprises:
- concatenating the cluster embeddings, or
- elementwise summing the cluster embeddings, or
- performing a principal component analysis and generating the global embedding based on principal components, or
- elementwise averaging the cluster embeddings, or
- using a neural network to combine the cluster embeddings.

12. The method of any one of claims 1 to 11, wherein determining a similarity of the global embedding with a reference global embedding comprises:
- determining a similarity score and/or a dissimilarity score of the global embedding and the reference global embedding, wherein the similarity score and/or the dissimilarity score is/are selected from or based on one or more of the following:
∘ dot product
∘ cosine similarity
∘ Jaccard similarity.
∘ Euclidean distance:
∘ Manhattan distance
∘ Chebyshev distance,
∘ Minkowski distance,
∘ weighted Minkowski distance,
∘ Mahalanobis distance,
∘ Hamming distance,
∘ Canberra distance,
∘ Bray Curtis distance.

13. The method of any one of claims 1 to 12, wherein determining a similarity of the global embedding with one or more reference global embeddings comprises:
- determining a similarity score for each pair of a reference global embedding and the global embedding.

14. The method of any one of claims 1 to 13, wherein identifying visual reference data for which the similarity is greater than a predefined threshold comprises:
- comparing the similarity score with a predefined threshold,
- in case the similarity score is greater than the predefined threshold: outputting and/or storing the reference visual data as duplicate or near-duplicate.

15. The method of any one of claims 1 to 14, wherein identifying visual reference data for which the similarity is greater than a predefined threshold comprises:
- comparing the similarity score with a predefined lower threshold and a predefined upper threshold,
- in case the similarity score is greater than the upper predefined threshold: outputting and/or storing the reference visual data as duplicate or near-duplicate,
- in case the similarity score is greater than the lower threshold and less than the upper threshold: conducting a further analysis of the similarity of the visual data with the reference visual data.
wherein conducting a further analysis comprises:
- determining a similarity between the visual data and the reference visual data or determining a similarity between one or more patch embeddings with one or more reference patch embeddings.

16. A computer system comprising:
a processing unit; and
a memory that stores a computer program configured, when executed by the processing unit, to cause the computer system to perform the method of any one of claims 1 to 15.

17. A non-transitory computer readable storage medium having stored thereon a computer program that, when executed by a processing unit of a computer system, cause the computer system to execute the method of any one of claims 1 to 15.
